# EUROPÄISCHE PATENTSCHRIFT

(11) **EP 2 396 875 B1**
(45) Veröffentlichungstag und Bekanntmachung des Hinweises auf die Patenterteilung: **11.06.2014**
(21) Anmeldenummer: 10705098.1
(22) Anmeldetag: 11.02.2010
(51) Int. Cl.: H02K 49/04

(54) **ANLAGE**
INSTALLATION
INSTALLATION

(30) Priorität: 16.02.2009 DE 102009009071
(43) Veröffentlichungstag der Anmeldung: 21.12.2011
(73) Patentinhaber: SEW-Eurodrive GmbH & Co, D-76646 Bruchsal (DE)
(72) Erfinder: SCHMIDT, Josef, 76676 Graben-Neudorf (DE); MAHLEIN, Jochen, 76139 Karlsruhe (DE); BECKER, Günter, 76684 Östringen (DE); SCHWESINGER, Klaus, 76646 Bruchsal (DE); EGGER, Björn, 76646 Bruchsal (DE)
(86) Internationale Anmeldenummer: PCT/EP2010/000837
(87) Internationale Veröffentlichungsnummer: WO 2010/091854

(56) Entgegenhaltungen:
- WO-A1-2007/007028
- DE-A1- 19 524 289
- DE-A1-102008 031 153

## Beschreibung

Die Erfindung betrifft eine Anlage.

Es ist bekannt, Rotoren von Synchronmotoren an ihrem Umfang mit Dauermagneten zu bestücken.

Aus WO 2007/007028 ist ein Antriebsystem bekannt umfassend einen Teil als Schwertteil, der sich in Bewegungsrichtung erstreckt und einen relativ zum ersten Teil bewegbar angeordneten zweiten Teil, wobei der zweite Teil eine drehbar gelagerte, antreibbare Scheibe, die an ihrem Umfang jeweils Dauermagnete aufweist, deren Magnetisierungsrichtung jeweils zum in Umfangsrichtung nächstbenachbarten Dauermagneten abwechselt, wobei die Drehachse der Scheibe senkrecht zur Bewegungsrichtung ausgerichtet ist.

Aus DE 10 2008 031 153 ist ein Antriebsystem bekannt, umfassend einen ersten und einen zum ersten relativ bewegbar angeordneten zweiten Teil, wobei der erste Teil ein in Bewegungsrichtung sich erstreckendes, langgestreckt ausgeführtes Schwertteil aufweist, wobei der zweite Teil zwei drehbar gelagerte, antreibbare Scheiben umfasst, wobei die Drehachsen der Scheiben koaxial angeordnet sind und senkrecht zur Bewegungsrichtung ausgerichtet sind, wobei das Schwertteil zwischen Abschnitten der Scheiben angeordnet ist, wobei die Scheiben an ihrem Umfang im jeweiligen Abschnitt jeweils Dauermagnete aufweisen, deren Magnetisierungsrichtung jeweils zum in Umfangsrichtung nächstbenachbarten Dauermagneten abwechselnde Richtung aufweist und zwar senkrecht zur Oberfläche des jeweiligen Abschnitts.

**Aus der** DE 195 24 289 A1 **ist eine Vorrichtung zum Bremsen von elektrisch leitfähigen Bändern nach dem Wirbeistromprinzip bekannt.**

Der Erfindung liegt daher die Aufgabe zugrunde, ein Anlage mit mindestens einem Antriebssystem weiter zu verbessern, wobei Verluste klein zu halten sind.

Erfindungsgemäß wird die Aufgabe bei der Anlage nach den in Anspruch 1 angegebenen Merkmalen gelöst.

Wichtige Merkmale der Erfindung bei der Anlage, dass sie einen ersten und einen zum ersten relativ bewegbar angeordneten zweiten Teil umfasst,

wobei der erste Teil ein in Bewegungsrichtung sich erstreckendes, Insbesondere langgestreckt ausgeführtes Schwertteil aufweist.
wobei
der zweite Teil zumindest zwei drehbar gelagerte, antreibbare Scheiben mit jeweils einem konusförmigen Abschnitt umfasst, wobei die Drehachsen der Scheiben sich schneiden, wobei die Konusspitze oder Verjüngungsrichtung der konusförmigen Abschnitte in Richtung des Schnittpunktes weist,
wobei die Drehachsen senkrecht zur Bewegungsrichtung ausgerichtet sind,
wobei das Schwertteil zwischen den konusförmigen Abschnitten der Scheiben angeordnet ist,
wobei die Scheiben an ihrem Umfang im jeweiligen konusförmigen Abschnitt jeweils Dauermagnete aufweisen, deren Magnetisierungsrichtung jeweils zum in Umfangsrichtung nächstbenachbarten Dauermagneten abwechselnde Richtung aufweist, insbesondere senkrecht zur Oberfläche des jeweiligen konusförmigen Abschnitts.

Von Vorteil ist dabei, dass die Vortriebskraft mit Wirbelströmen erzeugt wird. Mittels der Orientierung der Drehachsen der Scheiben sind Verluste beim Annähern der Dauermagnete an das Schwertteil verringerbar. Bei anderen Orientierungen sind diese Verluste größer und es entstehen auch Kraftkomponenten in anderen Richtungen, so dass nicht nur Vorschubskraft in Bewegungsrichtung entsteht. Dies gilt insbesondere bei Orientierungen, bei denen die Drehachsen der Scheiben identisch ausgerichtet sind. Bei der Erfindung entsteht der wesentliche Teil der Vorschubkraft nur in Bewegungsrichtung. Denn der wesentliche Teil der Vorschubskraft wird tangential zur Bewegungsrichtung des jeweiligen Dauermagneten erzeugt, wobei die Kraft bei abnehmendem Abstand des jeweiligen Dauermagneten zum Schwertteil stark zunimmt. Der Dauermagnet taucht sozusagen in den Wirbelstrom-Wirkbereich ein und dann wieder aus.

Bei einer vorteilhaften Ausgestaltung ist das Schwertteil Teilbereich eines Schienensystems oder einer Schiene, wobei das Schienensystem oder die Schiene auch Führungsbereiche für Rollen des als Fahrzeug ausgebildeten zweiten Teils aufweist, insbesondere wobei das Schienensystem oder die Schiene einstückig ausgebildet ist. Von Vorteil ist dabei, dass eine einfache integrierte Herstellung ausführbar ist.

Bei einer vorteilhaften Ausgestaltung sind die Scheiben von Elektromotoren antreibbar, insbesondere von Drehstrommotoren, insbesondere von winkelsynchron angesteuerten Synchronmotoren. Von Vorteil ist dabei, dass einfache kostengünstige Mittel anwendbar sind.

Bei einer vorteilhaften Ausgestaltung sind die konusförmigen Abschnitte in einem jeweils derartigen axialen Bereich der Drehachsen angeordnet, dass Ebenen, deren Normalenrichtung Drehachsenrichtung ist und die im axialen Bereich angeordnet sind, eine nicht-leere Schnittmenge aufweisen, wenn sie nicht parallel zueinander sind: Von Vorteil ist dabei, dass ein sehr hoher Wirkungsgrad erreichbar ist, da bei der Drehbewegung sehr starke Magnetfeldlinien in das Schwertteil eingeleitet werden, wodurch sehr hohe Wirbelströme erzeugt werden.

Bei einer vorteilhaften Ausgestaltung ist das Schwertprofil in der Vereinigungsmenge der Schnittmengen angeordnet. Von Vorteil ist dabei, dass möglichst starke Magnetfeldlinien einlenkbar sind Ins Schwertprofil.

Bei einer vorteilhaften Ausgestaltung ist jeder Dauermagnet aus zwei oder mehr einzelnen Dauermagneten ausgeführt, die senkrecht zur Oberfläche des jeweiligen konusförmigen Abschnittes übereinander angeordnet sind. Von Vorteil ist dabei, dass ein noch stärkeres Magnetfeld und somit auch eine höhere Vorschubkraft erzeugbar ist.

Bei einer vorteilhaften Ausgestaltung ist jeder Dauermagnet aus zwei oder mehr einzelnen Dauermagneten ausgeführt, die im konusförmigen Abschnitt in Umfangsrichtung nebeneinander angeordnet sind. Von Vorteil ist dabei, dass ein höherer Wirkungsgrad erreichbar ist.

Bei einer vorteilhaften Ausgestaltung ist das Schwertteil aus Aluminium oder Kupfer oder einem anderen besser als Stahl elektrisch leitfähigen Material gefertigt. Von Vorteil ist dabei, dass geringere Verluste auftreten als bei Verwendung von Stahl.

Bei einer vorteilhaften Ausgestaltung ist das Schwertteil aus ein Stranggussprofil. Von Vorteil ist dabei, dass eine einfache Herstellung ermöglicht ist.

Bei einer vorteilhaften Ausgestaltung ist eine derartige Regelvorrichtung vorgesehen, dass die beiden Antriebe der Scheiben synchron betreibbar sind. Von Vorteil ist dabei, dass Verluste reduzierbar sind.

Bei einer vorteilhaften Ausgestaltung ist die Antriebskraft mittels im Schwertteil induzierten Wirbelströmen erzeugbar, insbesondere durch bei Vorbeidrehen der Scheiben am Schwertteil entlang. Von Vorteil ist dabei, dass ein sanftes Antreiben ermöglicht ist. Insbesondere ist es ermöglicht durch synchrones Betreiben der Scheiben einen Winkelversatz einzustellen, so dass die Vortriebskraft sehr schnell und einfach veränderbar ist.

Bei einer vorteilhaften Ausgestaltung ist jeweils auf einem mit der jeweiligen Scheibe drehfest verbundenen Teil eine Stützrolle gelagert vorgesehen, insbesondere mittels Kugellager gelagert, wobei die Stützrolle am Schienensystem oder an der Schiene abrollbar und/oder führbar ist. Von Vorteil ist dabei, dass die Lagerung für die Stützrolle nur einer relative Drehzahldifferenz ausgesetzt ist zwischen der der Fahrzeuggeschwindigkeit entsprechenden Drehzahl der am Schienensystem abrollenden Stützrolle, insbesondere schlupffrei abrollenden Stützrolle, und der Drehzahl der Rotorwelle zum Antreiben der Scheibe. Die letztgenannte Drehzahl ist im Normalbetrieb viel höher als die erstere, wenn eine hohe Vortriebskraft erzeugt werden soll. Bei Verschwinden der genannten Drehzahldifferenz sind nur unwesentliche Wirbelstrombeträge erzielbar und somit keine wesentlichen Vorschubkräfte.

Bei einer vortellhäften Ausgestaltung ist am Schienensystem oder an der Schiene der Abrollbereich oder Führungsbereich für die Stützrolle und/oder an der Stützrolle die Außenfläche derart konkav, Insbesondere auf beiden zu den jeweiligen Scheiben zugewandten Seiten des Schienensystems, dass bei Auslenkung des Fahrzeuges von seiner Soll-Orientierung Rückstellkräfte zur Stabilisierung der Soll-Orientierung wirksam sind, Von Vorteil ist dabei, dass eine Selbststabilisierung durch zwei konkave Profilbereiche am Schienensystem erzielbar ist, indem die konkaven Bereiche zueinander hin ausgerichtet sind. Somit führt eine Auslenkung zu einer derartigen Verschiebung des Schwerpunktes, dass eine rückstellende Kraft erzeugt wird, wobei nur die Gravitationskraft ursächlich ist.

Weitere Vorteile ergeben sich aus den Unteransprüchen.

Die Erfindung wird nun anhand von Abbildungen näher erläutert:

In der Figur 1 ist eine erfindungsgernäße Vorrichtung schematisch skizziert in Draufsicht, wobei nur das Schwertleil 5 und die beiden Scheiben(3, 4) gezeigt sind.

In Figur 2 ist die zugehörige Schrägansicht gezeigt.

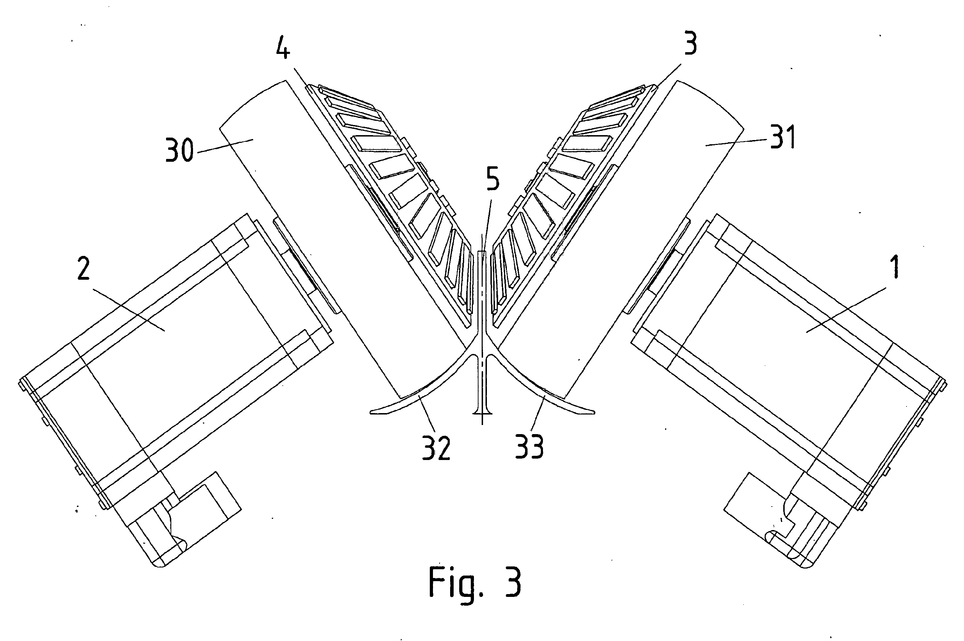

In Figur 3 ist hierzu eine Schnittansicht gezeigt, wobei die antreibenden Motoren (1, 2) samt Stützrollen (30, 31) gezeigt sind und das Schwertteil 5 um weitere Schienenteile (32, 33) ergänzt ist.

In Figur 4 ist ein Schienenfahrzeug gezeigt, das ein Fahrzeuggestänge 40 aufweist, das mittels Rollen 41 an der Schiene positionierbar und entlang dieser Schiene verfahrbar angeordnet ist und an dem zwei Antriebssysteme, nämlich ein vorderes und ein hinteres, angebracht sind. Die Antriebssysteme sind im Wesentlichen jeweils der Figur 3 entsprechend ausgeführt.

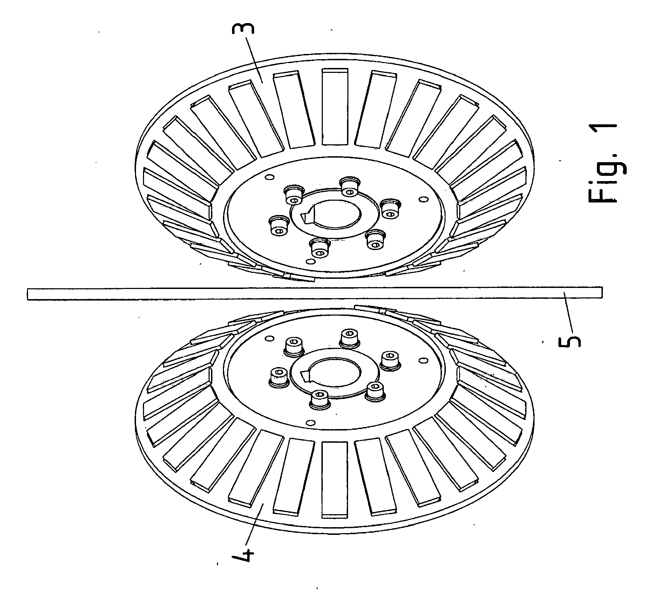

Wie in Figur 1 verdeutlicht, treibt der Elektromotor 1 eine Scheibe 3 und der Elektromotor 2 eine Scheibe 4 an, wobei die Scheiben und Motoren miteinander verbunden sind und als Ganzes relativ bewegbar entlang dem Schwertteil 5 eines Schienensystems angeordnet sind.

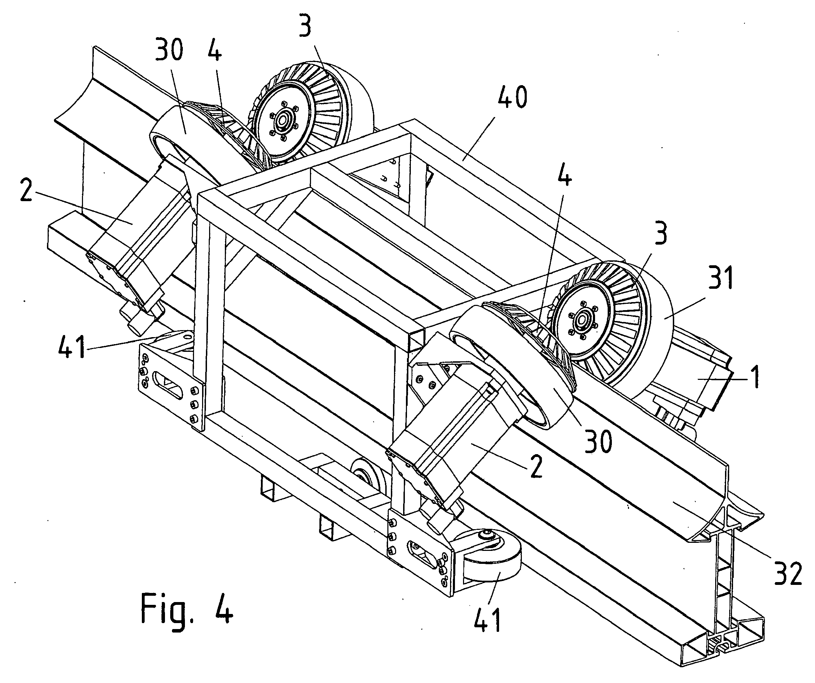

Die Motoren (1, 2) und Scheiben (3,4) bilden wie in Figur 4 beispielhaft gezeigt ein an einem Fahrzeug anbringbares Antriebssystem, wobei die Führungsräder 41 des Fahrzeuges an einem Schienensystem oder Schienenteil abrollbar sind, so dass das Fahrzeug am Schienensystem geführt ist.

Die Scheiben (3, 4) sind konisch ausgeführt und weisen an ihrem äußeren Umfang des konischen Bereichs Dauermagnete auf, deren Magnetisierungsrichtung im Vergleich zur Magnetisierungsrichtung der in Umfangsrichtung nächstbenachbarten Dauermagnete radial und entgegengesetzt ausgerichtet ist. Zwischen den Magneten ist in Umfangsrichtung ein Abstand ausgeführt.

Die Drehachsen der Scheiben (3, 4) schneiden sich und sind senkrecht zur Bewegungsrichtung orientiert. Das Schwertteil ist entlang der Bewegungsrichtung langgestreckt ausgeführt und ist vorzugsweise als Stranggussteil fertigbar. Am Schwertteil 5 sind auch die weiteren Schienenteile (32, 33) vorgesehen, die zur Führung der Rollen (30, 31) dienen. Vorzugsweise ist das Schwertteil 5 aus Aluminium oder Kupfer ausgeführt oder aus einem entsprechend elektrisch leitfähigen Material.

Die Bewegungsrichtung entspricht der Normalenrichtung derjenigen Ebene, welche mittels der Drehachsen der Scheiben (3, 4) aufgespannt ist.

Bei hoher Drehzahl der Scheiben (3, 4) werden Wirbelströme im Schwertteil 5 erzeugt, da die am Schwertteil 5 vorbeidrehenden Scheiben diese erzeugen und somit eine Antriebskraft zwischen Schwertteil 5 und Scheiben (3, 4) bewirkt ist.

Die Motoren (1, 2) sind als Drehstrommotoren ausführbar, wie beispielsweise Asynchronmotoren oder Synchronmotoren. Dabei werden die Motoren von jeweiligen Umrichtern gespeist und somit auch gesteuert. Hierbei wird als Ziel der Regelung eine Synchronität der Scheiben gesetzt, damit das in das Schwertteil eindringende, von den Dauermagneten beider Scheiben erzeugte Magnetfeld möglichst stark ist und somit möglichst große Wirbelströme erzeugt und daher auch große Vortriebskräfte.

Der Abstand zwischen den Scheiben (3, 4) ist etwas größer als die Dicke des Schwertteils 5, so dass auch unter Berücksichtigung von Fertigungstoleranzen keine Berührung stattfindet zwischen dem Schwertteil 5 und den Scheiben. Denn die Drehzahl der Scheiben ist viel höher als die Drehzahl eines gedachten, am Schwertteil ohne Schlupf abrollenden Rades.

Die Schiene umfasst also die Führungsbereiche für die Rollen 41 und die Schienenteile (32,33) zur Führung der Stützrollen (30, 31). Dabei sind die Stützrollen jeweils auf der die jeweilige Scheibe antreibenden Rotorwelle gelagert vorgesehen.

Die Konus sind mit ihrer spitzen Seite hin orientiert zum Schnittpunkt der Drehachsen der Scheiben (3, 4).

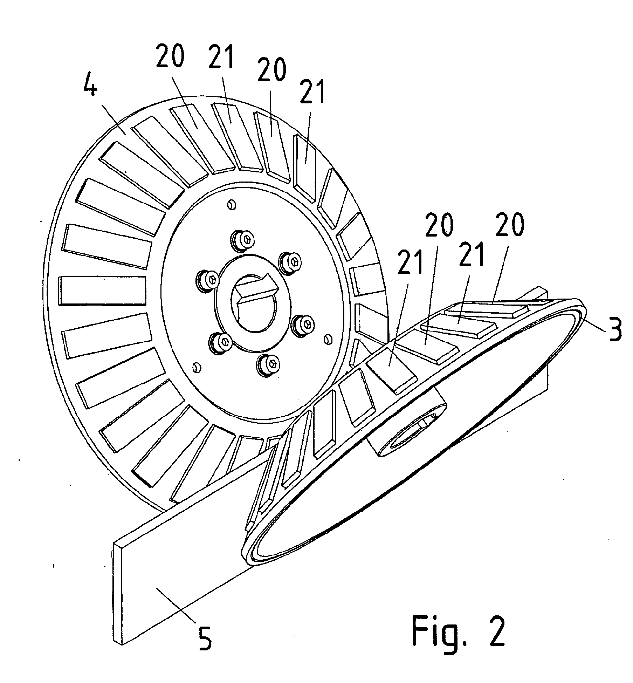

In der Figur 2 sind die Dauermagnete 20 mit nach außen gerichteten Nordpolen und die Dauermagnete 21 mit nach außen gerichtete Südpolen gezeigt.

Vorzugsweise weist das Fahrzeug eine Steuereinheit auf, die die Motoren beider Antriebssysteme derart ansteuert, dass Winkelsynchronität Ziel der in der Steuereinheit integriert ausgebildeten Regelung ist.

Mittels der Stützrollen ist ein Konstanthalten des Abstandes zwischen dem Schwertteil und den konusförmigen Abschnitten ermöglicht. Außerdem ist bei kurvenförmigen verlaufenden Schienenabschnitten ermöglicht, den gedachten Drehpunkt, insbesondere Umlenkpunkt, hierfür in den Bereich der Stützrolle zu positionieren, also beispielsweise den Schwerpunkt der Stützrolle als solchen gedachten Drehpunkt zu verwenden. Auf diese Weise sind also sogar sehr eng verlaufende Kurven ermöglicht. Unter Kurve wird hier insbesondere auch eine steigungsbedingter Kurvenverlauf verstanden.

Bei einem erfindungsgemäßen alternativen Ausführungsbeispiel sind die Motoren (1, 2) und Scheiben (3, 4), also beispielsweise das Fahrzeug nach Figur 4 stationär angeordnet und der verfahrbare Anlagenteil umfasst dann das Schwertteil 5 samt Schienenteilen (32, 33).

Bei weiteren erfindungsgemäßen Ausführungsbeispielen beträgt der Winkel zwischen den Drehachsen zwischen 40° und 100°. Besonders vorteilhaft hat sich ein Wert von etwa 70° erwiesen, Insbesondere also ein Wert aus dem Bereich zwischen 60° und 80°. Der Öffnungswinkel des Konus, also der Winkel der Geraden, welche diejenigen Geradenabschnitte umfassen, die als Schnittgebilde zwischen der die Drehachsen enthaltenden Ebene und dem konusförmigen Abschnitt einer der Scheiben entstehen, entspricht im Wesentlichen ebenfalls dem genannten Winkel zwischen den Drehachsen.

### Bezugszeichenliste

- 1: Elektromotor
- 2: Elektromotor
- 3: Scheibe
- 4: Scheibe
- 5: Schwertteil, insbesondere Schienenteil
- 20: Dauermagnete, nach außen gerichtete Nordpole
- 21: Dauermagnete, nach außen gerichtete Südpole
- 30: Stützrollen
- 31: Stützrollen
- 32: Schienenteil
- 33: Schienenteil
- 40: Fahrzeuggestänge
- 41: Rollen, Führungsräder

## Patentansprüche

1. Anlage mit mindestens einem Antriebssystem, umfassend einen ersten und einen zum ersten relativ bewegbar angeordneten zweiten Teil,
wobei der erste Teil ein in Bewegungsrichtung sich erstreckendes, Insbesondere langgestreckt ausgeführtes Schwertteil (5) aufweist,
wobei der zweite Teil zumindest zwei drehbar gelagerte, antreibbare Scheiben (3, 4) mit jeweils einem konusförmigen Abschnitt umfasst, wobei die Drehachsen der Scheiben (3, 4) sich schneiden, wobei die Konusspitze oder Verjüngungsrichtung der konusförmigen Abschnitte In Richtung des Schnittpunktes weist,
wobei die Drehachsen senkrecht zur Bewegungsrichtung ausgerichtet sind,
wobei das Schwertteil (5) zwischen den konusförmigen Abschnitten der Scheiben (3, 4) angeordnet ist,
wobei die Scheiben (3, 4) an ihrem Umfang im jeweiligen konusförmigen Abschnitt jeweils Dauermagnete (20, 21) aufweisen, deren Magnetisierungsrichtung jeweils zum in Umfangsrichtung nächstbenachbarten Dauermagneten (20, 21) abwechselnde Richtung aufweist, insbesondere senkrecht zur Oberfläche des jeweiligen konusförmigen Abschnitts.

2. Anlage nach mindestens einem der vorangegangenen Ansprüche,
**dadurch gekennzeichnet, dass**
das Schwertteil (5) Teilbereich eines Schienensystems oder einer Schiene ist, wobei das Schienensystem oder die Schiene auch Führungsbereiche für Rollen (41) des als Fahrzeug ausgebildeten zweiten Teils aufweist, Insbesondere wobei das Schienensystem oder die Schiene einstückig ausgebildet ist.

3. Anlage nach mindestens einem der vorangegangenen Ansprüche,
**dadurch gekennzeichnet, dass**
die Scheiben (3, 4) von Elektromotoren (1, 2) antreibbar sind, insbesondere von Drehstrommotoren, insbesondere von winkelsynchron angesteuerten Synchronmotoren.

4. Anlage nach mindestens einem der vorangegangenen Ansprüche,
**dadurch gekennzeichnet, dass**
die konusförmigen Abschnitte in einem jeweils derartigen axialen Bereich der Drehachsen angeordnet sind, dass Ebenen, deren Normalenrichtung Drehachsenrichtung ist und die im axialen Bereich angeordnet sind, eine nicht-leere Schnittmenge aufweisen, wenn sie nicht parallel zueinander sind,

5. Anlage nach mindestens einem der vorangegangenen Ansprüche,
**dadurch gekennzeichnet, dass**
das Schwertprofil in der Vereinigungsmenge der Schnittmengen angeordnet ist.

6. Anlage nach mindestens einem der vorangegangenen Ansprüche,
**dadurch gekennzeichnet, dass**
jeder Dauermagnet aus zwei oder mehr einzelnen Dauermagneten (20, 21) ausgeführt ist, die senkrecht zur Oberfläche des jeweiligen konusförmigen Abschnittes übereinander angeordnet sind.

7. Anlage nach mindestens einem der vorangegangenen Ansprüche,
**dadurch gekennzeichnet, dass**
jeder Dauermagnet aus zwei oder mehr einzelnen Dauermagneten (20, 21) ausgeführt ist, die im konusförmigen Abschnitt in Umfangsrichtung nebeneinander angeordnet sind.

8. Anlage nach mindestens einem der vorangegangenen Ansprüche,
**dadurch gekennzeichnet, dass**
das Schwerteil (5) aus Aluminium gefertigt ist.

9. Anlage nach mindestens einem der vorangegangenen Ansprüche,
**dadurch gekennzeichnet, dass**
das Schwertteil (5) aus ein Stranggussprofil ist.

10. Anlage nach mindestens einem der vorangegangenen Ansprüche,
**dadurch gekennzeichnet, dass**
eine derartige Regelvorrichtung vorgesehen ist, dass die beiden Antriebe der Scheiben (3, 4) synchron betreibbar sind.

11. Anlage nach mindestens einem der vorangegangenen Ansprüche.
**dadurch gekennzeichnet, dass**
die Antriebskraft mittels im Schwertteil (5) induzierten Wirbelströmen erzeugbar ist, insbesondere durch bei Vorbeidrehen der Scheiben (3, 4) am Schwertteil (5) entlang.

12. Anlage nach mindestens einem der vorangegangenen Ansprüche,
**dadurch gekennzeichnet, dass**
jeweils auf einem mit der jeweiligen Scheibe (3, 4) drehfest verbundenen Teil eine Stützrolle (30, 31) gelagert vorgesehen ist, insbesondere mittels Kugellager gelagert, wobei die Stützrolle (30, 31) am Schienensystem oder an der Schiene abrollbar und/oder führbar ist.

13. Anlage nach mindestens einem der vorangegangenen Ansprüche,
**dadurch gekennzeichnet, dass**
am Schienensystem oder an der Schiene der Abrollbereich oder Führungsbereich für die Stützrolle (30, 31) und/oder an der Stützrolle (30, 31) die Außenfläche derart konkav ist, insbesondere auf beiden zu den jeweiligen Scheiben zugewandten Seiten des Schienensystems, dass bei Auslenkung des Fahrzeuges von seiner Soll-Orientierung Rückstellkräfte zur Stabilisierung der Soll-Orientierung wirksam sind.

## Claims

1. An installation with at least one drive system, comprising a first part and a second part arranged movably relative to the first part,
wherein the first part is a tongue part (5), in particular an elongate one, extending in the direction of movement,
wherein the second part comprises at least two rotatably mounted, drivable discs (3, 4) with in each case a cone-shaped section, wherein the axes of rotation of the discs (3, 4) intersect, wherein the cone tip or direction of tapering of the cone-shaped sections pointing in the direction of the point of intersection,
wherein the axes of rotation are oriented perpendicular to the direction of movement,
wherein the tongue part (5) is arranged between the cone-shaped sections of the discs (3, 4),
wherein the discs (3, 4) have on their periphery in the respective cone-shaped section in each case permanent magnets (20, 21), the direction of magnetisation of which in each case has an alternate direction to the next adjacent permanent magnet (20, 21) in the peripheral direction, in particular perpendicular to the surface of the respective cone-shaped section.

2. An installation according to at least one of the preceding claims, **characterised in that** the tongue part (5) is a partial area of a rail system or a rail, the rail system or the rail also having guide regions for rollers (41) of the second part which is formed as a vehicle, in particular the rail system or the rail being formed of one piece.

3. An installation according to at least one of the preceding claims, **characterised in that** the discs (3, 4) can be driven by electric motors (1, 2), in particular by three-phase motors, in particular by synchronous motors which are controlled in angularly synchronous manner.

4. An installation according to at least one of the preceding claims, **characterised in that** the cone-shaped sections are arranged in an axial region of the axes of rotation which is such in each case that planes, the normal direction of which is the axis-of-rotation direction and which are arranged in the axial region, have a non-empty intersection if they are not parallel to one another.

5. An installation according to at least one of the preceding claims, **characterised in that** the tongue profile is arranged in the set union of the intersections.

6. An installation according to at least one of the preceding claims, **characterised in that** each permanent magnet is formed from two or more individual permanent magnets (20, 21) which are arranged above one another perpendicularly to the surface of the respective cone-shaped section.

7. An installation according to at least one of the preceding claims, **characterised in that** each permanent magnet is formed from two or more individual permanent magnets (20, 21) which are arranged next to one another in the peripheral direction in the cone-shaped section.

8. An installation according to at least one of the preceding claims, **characterised in that** the tongue part (5) is manufactured from aluminium.

9. An installation according to at least one of the preceding claims, **characterised in that** the tongue part (5) is manufactured from a continuously-cast profile.

10. An installation according to at least one of the preceding claims, **characterised in that** such a regulating device is provided that the two drives of the discs (3, 4) can be operated synchronously.

11. An installation according to at least one of the preceding claims, **characterised in that** the drive force can be generated by means of eddy currents induced in the tongue part (5), in particular by [sic] upon turning the discs (3, 4) past along the tongue part (5).

12. An installation according to at least one of the preceding claims, **characterised in that** in each case a supporting roller (30, 31) is provided mounted on a part which is connected for co-rotation to the respective disc (3, 4), in particular is mounted by means of ball bearings, the supporting roller (30, 31) being able to be rolled and/or guided on the rail system or on the rail.

13. An installation according to at least one of the preceding claims, **characterised in that** on the rail system or on the rail the rolling region or guide region for the supporting roller (30, 31) and/or on the supporting roller (30, 31) the outer surface is concave, in particular on both sides of the rail system which face the respective discs, such that restoring forces for stabilising the desired orientation are effective upon deflecting the vehicle from its desired orientation.

## Revendications

1. Installation avec au moins un système d'entraînement, comprenant installation comprenant une première partie et une deuxième partie disposée mobile par rapport à la première,
sachant que la première partie présente une pièce ensiforme (5), notamment réalisée oblongue, s'étendant dans la direction de déplacement,
sachant que la deuxième partie comprend au moins deux disques (3, 4) montés rotatifs, pouvant être entraînés et dotés chacun d'une section conique, sachant que les axes de rotation des disques (3, 4) se coupent, sachant que la pointe du cône ou la direction de rétrécissement des sections coniques est orientée vers le point d'intersection,
sachant que les axes de rotation sont orientés perpendiculairement à la direction de déplacement,
sachant que la pièce ensiforme (5) est disposée entre les sections coniques des disques (3, 4),
sachant que les disques (3, 4) présentent sur leur périphérie, dans la section conique respective, des aimants permanents respectifs (20, 21), dont le sens de magnétisation est chaque fois alterné d'un aimant permanent (20, 21) à l'aimant permanent (20, 21) immédiatement voisin en direction périphérique, en particulier perpendiculairement à la surface de la section conique respective.

2. Installation selon la revendication 1, **caractérisée en ce que** la pièce ensiforme (5) est une région partielle d'un système de rails ou d'un rail, sachant que le système de rails ou le rail présente également des régions de guidage pour des galets (41) de la deuxième partie réalisée sous forme de véhicule, sachant notamment que le système de rails ou le rail est réalisé d'un seul tenant.

3. Installation selon au moins une des revendications précédentes, **caractérisée en ce que** les disques (3, 4) peuvent être entraînés par des moteurs électriques (1, 2), en particulier par des moteurs triphasés, en particulier par des moteurs synchrones commandés en synchronisme angulaire.

4. Installation selon au moins une des revendications précédentes, **caractérisée en ce que** les sections coniques sont disposées dans une région axiale respective des axes de rotation de telle sorte que les plans, dont la direction normale est la direction de l'axe de rotation et qui sont disposés dans la région axiale, présentent une intersection d'ensembles non vide lorsqu'ils ne sont pas parallèles entre eux.

5. Installation selon au moins une des revendications précédentes, **caractérisée en ce que** le profil ensiforme est disposé dans l'ensemble de réunion des intersections d'ensembles.

6. Installation selon au moins une des revendications précédentes, **caractérisée en ce que** chaque aimant permanent est constitué de deux ou plusieurs aimants permanents individuels (20, 21) qui sont disposés superposés perpendiculairement à la surface de la section conique respective.

7. Installation selon au moins une des revendications précédentes, **caractérisée en ce que** chaque aimant permanent est constitué de deux ou plusieurs aimants permanents individuels (20, 21) qui sont disposés juxtaposés en direction périphérique dans la section conique.

8. Installation selon au moins une des revendications précédentes, **caractérisée en ce que** la pièce ensiforme (5) est fabriquée en aluminium.

9. Installation selon au moins une des revendications précédentes, **caractérisée en ce que** la pièce ensiforme (5) est constituée d'un profilé coulé en coulée continue.

10. Installation selon au moins une des revendications précédentes, **caractérisée en ce qu'**il est prévu un dispositif de régulation tel que les deux entraînements des disques (3, 4) peuvent être exploités de manière synchrone.

11. Installation selon au moins une des revendications précédentes, **caractérisée en ce que** la force d'entraînement peut être produite au moyen de courants de Foucault induits dans la pièce ensiforme (5), en particulier lorsque les disques (3, 4) passent en tournant le long de la pièce ensiforme (5).

12. Installation selon au moins une des revendications précédentes, **caractérisée en ce qu'**un galet de soutien (30, 31) est respectivement prévu en étant monté sur une pièce assemblée en solidarité de rotation au disque respectif (3, 4), en particulier en étant monté au moyen d'un roulement à billes, sachant que le galet de soutien (30, 31) peut rouler et/ou être guidé sur le système de rails ou sur le rail.

13. Installation selon au moins une des revendications précédentes, **caractérisée en ce que** la région de roulement ou de guidage pour le galet de soutien (30, 31) sur le système de rails ou sur le rail, et/ou la surface extérieure sur le galet de soutien (30, 31), est concave, en particulier sur les deux côtés du système de rails qui sont tournés vers les disques respectifs, de telle sorte qu'en cas de déviation du véhicule par rapport à son orientation de consigne, des forces de rappel sont actives pour stabiliser l'orientation de consigne.
